# EUROPEAN PATENT SPECIFICATION

(11) **EP 0 693 314 B1**
(45) Date of publication and mention of the grant of the patent: **26.09.2001**
(21) Application number: 94810428.6
(22) Date of filing: 20.07.1994
(51) Int. Cl.: B01J 20/32, G01N 30/48

(54) **Chromatography using silicon dioxide based adsorbents.**
Chromatographie, die Siliziumdioxyd basierende Adsorbentien verwendet.
Chromatographie utilisant des adsorbents à base de dioxyde de silicium.

(43) Date of publication of application: 24.01.1996
(73) Proprietor: CU CHEMIE UETIKON AG, CH-8707 Uetikon am See (CH)
(72) Inventor: Kováts, Ervin sz., Prof. Dr., CH-1007 Lausanne (CH); Jelinek, Lászlo, Dr., CH-1024 Ecublens (CH); Ohmacht, Robert, Dr., H-7621 Pécs (HU)
(74) Representative: Werffeli, Heinz R., Dipl.-Ing.ETH.

(56) References cited:
- EP-A- 0 574 642
- FR-A- 2 462 183
- J. OF CHROMATOGRAPHY, vol.630, no.1, 1993, AMSTERDAM,NL pages 1 - 19 G.F TI ET AL. 'Retention on non-polar adsorbents in liquid-solid chromatography'
- J. OF CHROMATOGRAPHY, vol.395, no.1, 12 June 1987, AMSTERDAM, NL pages 73 - 84 D.MOREL ET AL. 'INFLUENCE OF THE CHAIN LENGTH ON THE PHYSICAL STATE OF SILICA SURFACEs COVERED BY ALKYLDIMETHYLSILOXY LAYERS'

## Description

### Background of the invention.

Most stationary phases applied for the chromatographic analysis and preparative separation of high molecular weight biomolecules are surface modified silicon dioxide preparations¹. For preparative purposes precipitated silica with a high specific surface area is applied with large pore diameter in order to avoid molecular sieving effects and irreversible adsorption in the pores. If retention mechanism is based on hydrophobic interaction between biomolecules and the adsorbent, chromatography is often made in a chemically aggressive medium at high acidities or in buffers. Hence, the hydrolytic stability of the organic graft is an important parameter for the lifetime of the column and the reproducibility of the analysis. Finally, the surface modification must result grafts which completely shield the nature of the underlaying silica matrix in order to avoid adsorption on the bare silica.

It has been shown that by using triorganyl(dimethylamino)silanes as silylating agents fully hydrated silicon dioxide preparations can be covered with the densest possible monolayers even with triorganylsiloxy groups having bulky substituents. Such layers completely shield the silicon dioxide matrix and are stable and give reproducible results for at least during two years in a water/acetonitrile mixture at room temperature.

Monodispersed, calcined, compact, non-porous silicon dioxide microspheres could also be surface treated with monofunctional (dimethylamino)silanes as silylating agents². As an example of a surface coating with exposed alkyl chains microspheres were prepared with a monolayer of tetradecyldimethylsiloxy (C14) graft to give a surface coverage of Γₛₒₓ = 3.9 µmol m⁻². For chromatographic separations we prefer the C14 coating to the popular octadecyldimethylsiloxy (C18) grafts. In fact, C18 grafts show in a scanning calorimeter an endothermic enthalpic effect around 25 °C probably due to the "melting" of the quasi-cristalline octadecyl heather. Consequently, the C18-coating is not in a well defined state around room temperature at which such phases are mostly used for analysis contrary to the C14-covered adsorbents where the corresponding phase change is around 0 °C. Besides of this "soft" type non-polar graft with long alkyl chains a "hard" type surface was prepared with (3,3-dimethylbutyl)dimethyl(dimethylamino)silane as silylating agent. The resulting DMB-graft had a surface coverage of Γₛₒₓ = 3.8 µmol m⁻². These surfaces have a very good hydrolytic stability (see Example 4). The good resistance of the coating under aggressive conditions (80 °C, acidic solution) was explained by the fact that the bulky 3,3-dimethybutyl substituent hinders the access of nucleophiles to the silicon atom of the DMB-substituent. The hydrolytic stability of this "hard" non-polar coating seems to be even better than isopropylsiloxy grafts. In fact, the stability of layers prepared with (dimethylamino)silane silylating agents is due to two reasons. The first reason is the adequate choice of the substituent on the silicon (bulky substituents) but also as a second reason the high (highest possible) density of the organic coating largely contributes to the hydrolytic stability of the chemically bonded monolayer.

### Summary of the invention.

The preparation and use of dense surface layers on porous silica is well known. Also the preparation of non-porous, monosized silicon dioxide microspheres is well known. Surprisingly, dense surface layers on non-porous, monosized silica spheres yield a material which is suitable for the separation of biomolecules much faster than by any other known method. Most likely, this is due to the low surface area of the non-porous material.

It is an object of this invention to provide a method as set out in the claim.

The method of this invention uses adsorbents with dense surface layers obtained by treating the silicon dioxide surface with 3,3-dimethylbutyldimethyl(dimethylamino)silane as silylating agent to yield a hard, non-polar surface.

The method of this invention also uses adsorbents with dense surface layers obtained by treating the silicon dioxide surface with tetradecyldimethyl(dimethylamino)silane as silylating agent to yield a soft, non-polar surface.

The method of this invention also uses adsorbents prepared from powders composed of non-porous, monosized silicon dioxide microspheres for the high speed analysis of high molecular weight biomolecules.

### Detailed description.

The starting material for the preparation of non-polar adsorbents is either a meso-porous silica or a powder composed of nearly monosized non-porous spherical silicon dioxide. The surface of precipitated silicas are fully hydrated, the surface of calcined, compact microspheres must be rehydrated *prior* surface treatment. The rehydration can be made by treating calcined material with distilled water at 90 °C. The silylating agent is a monofunctional R-dimethyl(X)silane where the functional group X is dimethylamino, ethylamino or methylamino group and R is an alkyl, substituted alkyl or an aryl group. These agents are preferred to the popular X = methoxy-, ethoxy- or chloro-derivatives and have the advantage to give densest surface layers in one step. Methylamino, ethylamino or dimethylamino silanes were applied in a quantity of 15-30 µmol m⁻². As the final product has surface concentration of Γₛₒₓ = 3-6 µmol m⁻² the applied silylating agent corresponds to an excess of at least 200 %. The silicon dioxide is wetted by a solution of the silane in a low boiling apolar solvent such as pentane, hexane or cyclohexane then the solvent is evaporated and the product is heated at 140-250 °C with the silane during a period of 10-70 h.

Monosized microspheres must be first redispersed in a non-protic polar type solvent, such as acetonitrile, propionitrile, under the action of ultrasound. After redispersion the silylating agent is added, the suspension heated to reflux. After isolation and drying at 120 °C/10⁻³ Torr the powder is treated again with the same silylating agent as described before in order to complete the surface layer. Another possibility is to wet the slightly agglomerated redispersable powder by a non-polar type solvent such as cyclohexane, toluene or xylene, add the silylating agent and treat the stirred solution by ultrasound where the product is partly silylated and forms a monosized suspension. After heating to reflux for 10-30 h the product is isolated in a centrifuge. Elemental analysis shows that a nearly compact layer of alkyldimethylsiloxy layer is formed. The product may be treated as described before with the same silylating agent at elevated temperatures in order to complete silylation.

Using the final products columns were packed by known procedures.

### Example 1

*Preparation of Nu-DMB.* The starting material was Nucleosil from Macherey-Nagel (Düren, Germany) having the following specifications:
Nucleosil 300-5
Average pore diameter: 300 Å
Particle size: 5 µm
Batch N°: 9304
Specific surface area (BET): 118 m² g⁻¹

A quantity of 5.0 g of this product was suspended in an ampoule in a solution of 1.38 g of (3,3-dimethylbutyl)dimethyl(dimethylamino)silane in isopentane (5 ml) and the solvent was evaporated. After evaporation the ampoule was cooled, evacuated at 10⁻³ Torr, sealed and the dosed ampoule was placed in an oven. After 50 h at 140 °C the ampoule was opened, the white powder was washed by suspending it in cyclohexane and dried. Surface concentration of the (3,3-dimethylbutyl)dimethylsiloxy groups was Γₛₒₓ = 3.8 µmol m⁻². *In the following this stationary phase will be designated by Nu-DMB.*

### Example 2

*Preparation of Kovasil MS-DMB.* The starting material was Kovasil MS from Chemie Uetikon (Uetikon, Switzerland) composed of compact, non-porous silicon dioxide microspheres, rehydrated in water for 20 h. Specifications:
Particle diameter: 1.49 µm
Relative standard deviation of diameter: 1.2 %
Specific surface area (BET): 2.4 m² g⁻¹

A quantity of 10.0 g of the product was redispersed in 200 ml acetonitrile applying ultrasonic irradiation during 15 min. (3,3-dimethylbutyl)dimethyl(dimethylamino)silane (67.5 mg) was added to the suspension which was refluxed under an argon atmosphere during 12 h. The partly silylated product was isolated by centrifugation and washed with cyclohexane and finally dried. The dried product was transferred into a glass ampoule, the same silylating agent (60 mg) was added then the ampoule was cooled, evacuated and sealed. The closed ampoule was kept at 150 °C during 50 h. After cooling the ampoule was opened and the white powder was washed with cyclohexane and dried. Surface concentration of the (3,3-dimethylbutyl)dimethylsiloxy groups was Γₛₒₓ = 4.0 µmol m⁻². *In the following this stationary phase will be designated by Kovasil MS-DMB.* (The stationary phase silylated with the same method but with use of tetradecyldimethyl(dimethyilamino)silane as silylating agent will be designated by *Kovasil MS-C14*).

### Example 3

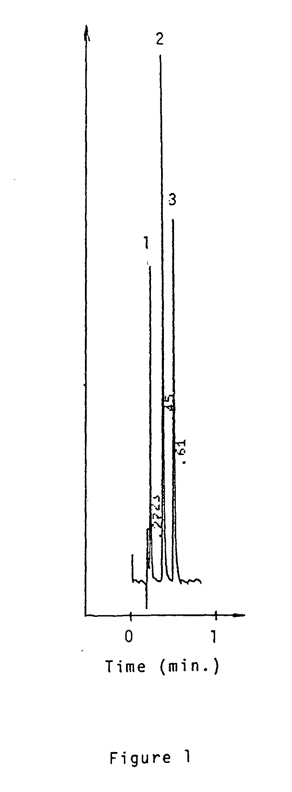

*Test of a column packed with Kovasil MS-C14.* Separation of a test mixture composed of toluene (1), butylbenzene (2) and pentylbenzene (3). Experimental: column: 33 x 4.6 mm; elution mode: isocratic; mobile phase: acetonitrile/water (AN/W = 50/50 by volume); flow rate: 0.9 ml min⁻¹; pressure: 20 MPa; temperature: ambient; detector: UV 254 nm (see Fig. 1).
Theoretical plate numbers, Nₓ: Nₜₒₗᵤₑₙₑ: 4100; N_{butylbenzene}: 6150; N_{pentylbenzene}: 7980. The increase of number of theoretical plates as a function of retention time was explained by extracolumn contributions of the chromatographic system to peak-broadening (with longer retention this contribution has a smaller effect).

### Example 4

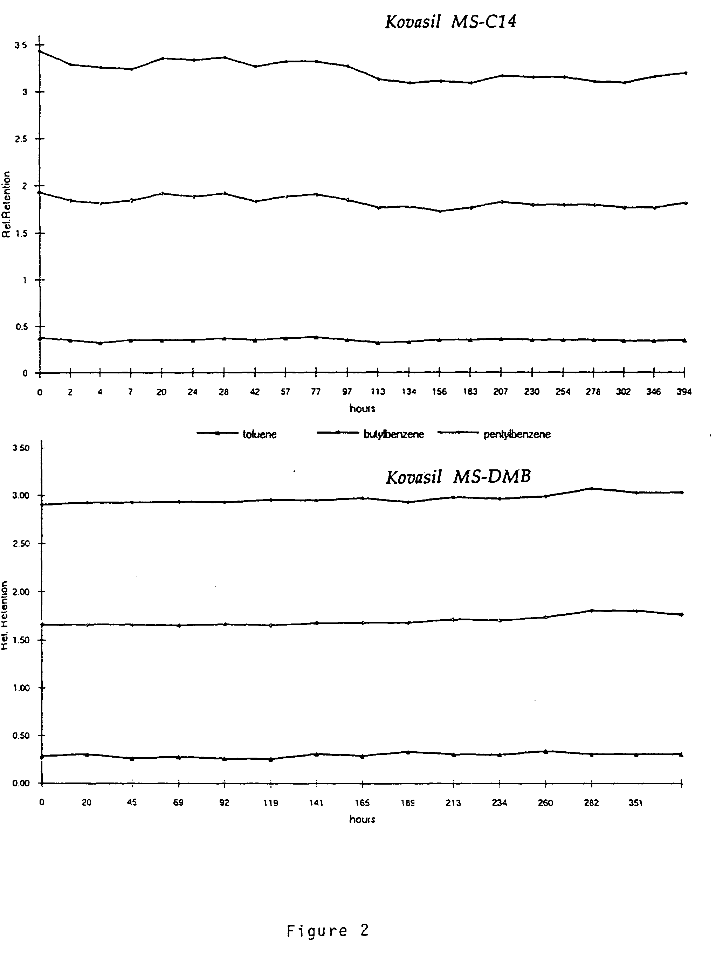

*Hydrolytic stability of the stationary phases, Kovasil MS-C14 and Kovasil MS-DMB*. Experimental: columns: 33 x 4.6 mm; mobile phase is a mixture of acetonitrile/water (AN/W = 50/50 by volume) containing 0.12 % trifluoroacetic acid (TFA); temperature: 80 °C; flow rate: 1.5 ml min⁻¹; pressure: 16 MPa. The columns were connected periodically to the chromatographic system (every 20 h) and the mixture of Example 3 was injected. Retention times as a function of time are shown in Fig. 2. During the whole test period (400 h) the number of theoretical plates remained constant.

### Example 5

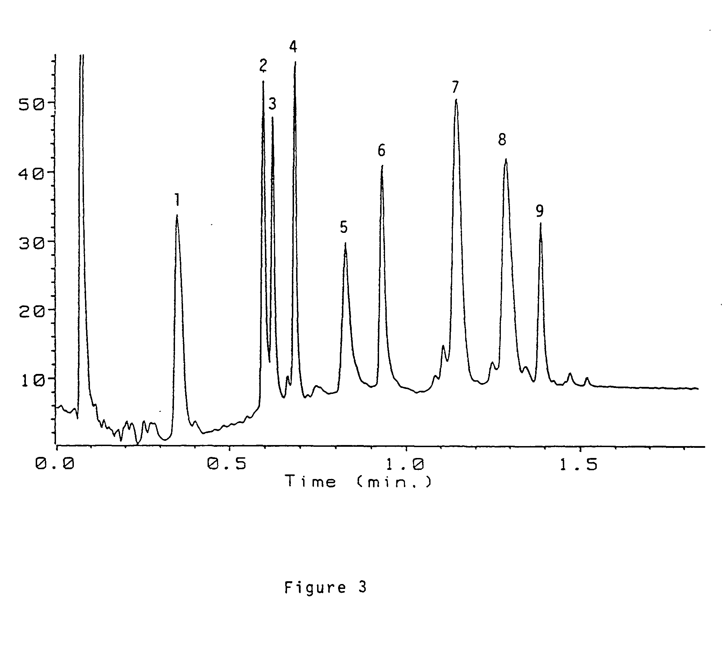

*Separation of a protein mixture of analytical importance on Kovasil MS-DMB* Components: 1 ribonuclease, 2 cytochrom C (horse), 3 cytochrom C (bovin), 4 lysosyme, 5 conalbumin, 6 myoglobin, 7 β-lactoglobulin B, 8 β-lactoglobulin A, 9 chymotrypsinogene. Experimental: column: 33 x 4.6 mm; elution mode: multilinear gradient by mixing A and B where eluent A is a mixture of AN/W = 20/80 and eluent B is AN/W = 90/10 both containing 0.12 % trifluoroacetic acid (TFA); elution program: 0 → 0.5 min 3.6 → 27 % B, 0.5 → 1 min 27 → 29 % B, 1 → 1.2 min 29 → 37 % B, 1.2 → 2 min 37 → 39 % B, keep and return; flow rate: 3.0 ml min⁻¹; pressure at start: 35.1 MPa; temperature: 80 °C; detector: UV 215 nm (see Fig. 3).

### Example 6

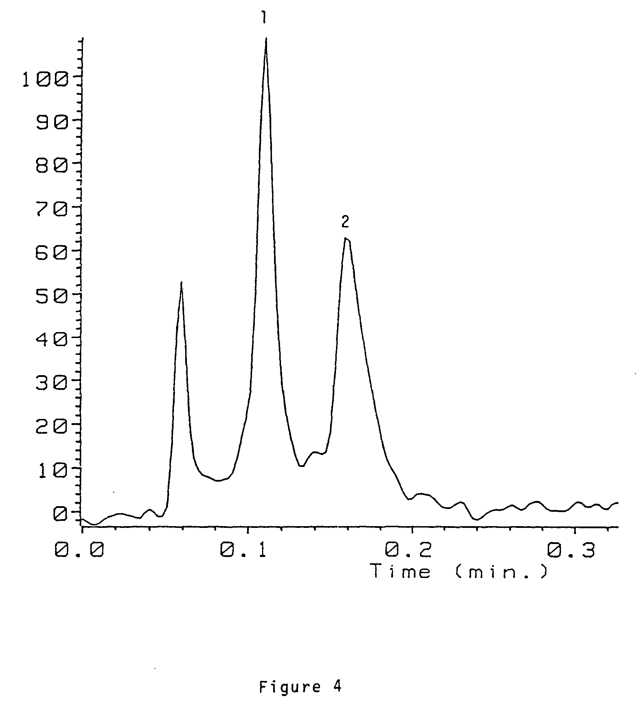

*Separation of β-lactoglobulins on Kovasil MS-DMB.* Components: 1 β-lactoglobulin B, 2 β-lactoglobulin A. Experimental: column: 33 x 4.6 mm; elution mode: linear gradient by mixing A and B where eluent A is a mixture of AN/W = 20/80 and eluent B is AN/W = 90/10 both containing 0.12 % trifluoroacetic acid (TFA); elution program: 0 → 0.8 min 28 → 100 % B, keep and return; flow rate: 3.6 ml min⁻¹; pressure at start: 35 MPa; temperature: 90 °C; detector: UV 215 nm (see Fig. 4).

### Example 7

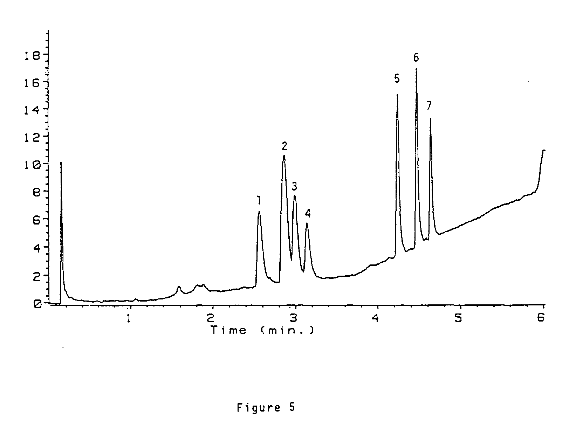

*Separation of octapeptides on Kovasil MS-DMB*. The seven octapeptides analysed have the following structure: Tyr-Ile-Pro-X-Ala-Glu-Lys-Ile with X: 1 X = Lys, 2 X = Asn, 3 X = Ala, 4 X = Glu, 5 X = Ile 6 X = Phe 7 X = Leu. Experimental: column: 33 x 4.6 mm; elution mode: multilinear gradient by mixing A and B where eluent A is a mixture of AN/W = 3/97 and eluent B is AN / W = 90 / 10 both containing 0.05 % trifluoroacetic acid (TFA); elution program: 0 → 3 min 1 → 9.7 % B, 3 → 7 min 9.7 → 50 % B, keep and return; flow rate: 1.5 ml min⁻¹; pressure at start: 22 MPa; temperature: 40 °C; detector: UV 215 nm (see Fig. 5).

### Example 8

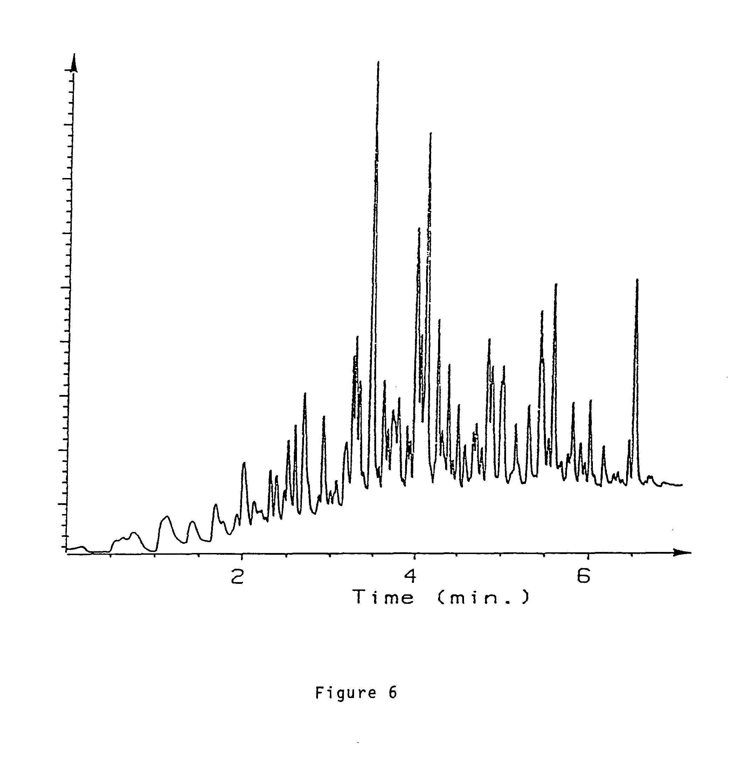

*Separation of trypsin digest of serum albumin on Kovasil MS-DMB.* Experimental: column: 66 x 4.6 mm; elution mode: multilinear gradient by mixing A and B where eluent A is a mixture of AN/W = 2/98 and eluent B is AN/W = 90/10 both containing 0.1 % trifluoroacetic acid (TFA); elution program: 0 → 1.8 min 5 → 12 % B, 1.8 → 3.8 min 12 → 32 % B, 3.8 → 6 min 32 → 50 % B, keep and return; flow rate: 1.4 ml min⁻¹; pressure at start: 37 MPa; temperature: 37 °C; detector: UV 215 nm (see Fig. 6).

### Example 9

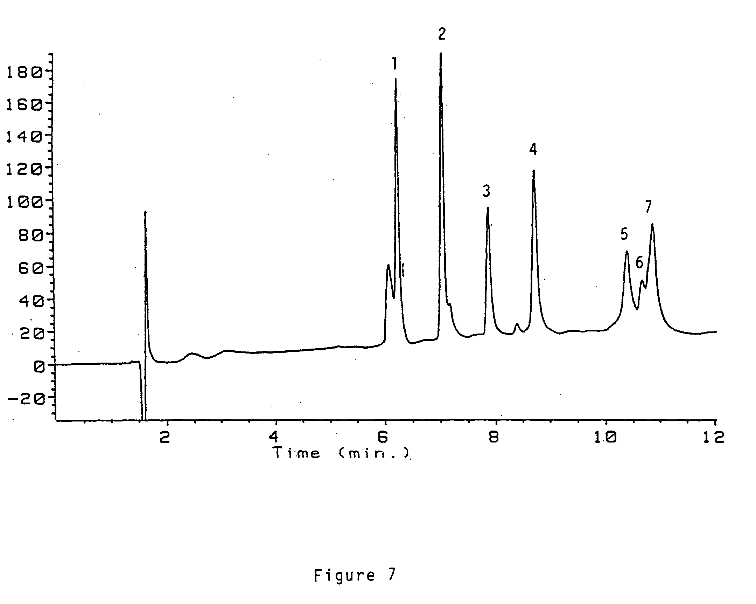

*Separation of proteins on Nu-DMB*. Components: 1 ribonuclease, 2 insulin (bovin), 3 cytochrom C (horse), 4 lysosyme, 5 chymotrypsin, 6 β-lactoglobulin B, 7 β-lactoglobulin A. Experimental: column: 125 x 4.6 mm; elution mode: linear gradient by mixing A and B where eluent A is a mixture of AN/W = 20/80 and eluent B is AN/W = 90/10 both containing 0.12 % trifluoroacetic acid (TFA); elution program: 0 → 20 min 0 → 80 % B, keep and return; flow rate: 1.0 ml min⁻¹; pressure at start: 14 MPa; detector: UV 215 nm (see Fig. 7). This example shows that surfaces covered with a dense layer may be also used for high capacity silica gel, consequently, for preparative separations and purifications.

### REFERENCES

1. Melander, W.R. and Horváth, Cs.; in Horváth, Cs. (ed.), *High Performance Liquid Chromatography - Advances and Perspectives,* Vol. 2, Academic Press, New York 1980
2. Jelinek, L., Erbacher, C., sz. Kováts, E., *European Patent* 0 574 642 A1 (1992)

## Claims

1. A method for the rapid chromatographic analysis of proteins or peptides, the method comprising: preparing an adsorbant, the adsorbant comprising redispersable, non-porous, monosized silicon dioxide microspheres covered with a dense layer of triorganylsilyl groups, selected from the group consisting of 3,3-dimethylbutyldimethylsilyl or tetradecyldimethylsilyl, the microspheres having a particle diameter of 1,49µm, packing a chromatographic column with the adsorbant, using the packed chromatographic column for chromatographically separating the said biomolecules, and analysing these eluted biomolecules with a detector.

## Patentansprüche

1. Ein Verfahren zur chromatographischen Schnellanalyse von Proteinen oder Peptiden, wobei das Verfahren folgendes umfasst: das Vorbereiten eines Adsorptionsmittels, wobei das Adsorptionsmittel wiederdispergierbare, nichtporöse Silikondioxid-Mikrokügelchen von derselben Größe umfasst, die mit einer dichten Schicht von Triorganylsilylgruppen bedeckt sind, welche aus der Gruppe bestehend aus 3,3-Dimethylbutyldimethylsilyl oder Tetradecyldimethylsilyl gewählt sind, wobei die Mikrokügelchen einen Körnchendurchmesser von 1,49*µ*m haben, das Bepacken einer chromatographischen Säule mit dem Adsorptionsmittel, das verwenden der bepackten chromatographischen Säule zum chromatographischen Trennen der besagten Biomoleküle und das Analysieren dieser eluierten Biomoleküle mit einem Detektor.

## Revendications

1. Procédé pour l'analyse chromatographique rapide de protéines ou de peptides, le procédé comprenant le fait de: préparer un adsorbant, l'adsorbant comprenant des microsphères de dioxyde de silicium de dimension unique, non poreuses, aptes à être remises en dispersion, recouvertes d'une couche dense de groupes triorganylsilyle choisis parmi le groupe constitué par le 3,3-diméthylbutyldiméthylsilyle et par le tétradécyldiméthylsilyle, les microsphères possédant un diamètre de particules de 1,49 µm; garnir une colonne chromatographique avec l'adsorbant; utiliser la colonne chromatographique garnie afin de séparer par chromatographie lesdites biomolécules; et analyser ces biomolécules éluées, à l'aide d'un détecteur.
